Europäisches Patentamt

(19) European Patent Office

Office européen des brevets

(11) Numéro de publication: **0 085 267**
**B1**

(12) **FASCICULE DE BREVET EUROPEEN**

(45) Date de publication du fascicule du brevet:
08.05.85

(51) Int. Cl.⁴: **A 47 J 31/54, F 24 H 1/10**

(21) Numéro de dépôt: 82402186.9

(22) Date de dépôt: 30.11.82

(54) Machine à café à thermostat isolé.

(30) Priorité. 12.01.82 FR 8200369

(43) Date de publication de la demande:
10.08.83 Bulletin 83/32

(45) Mention de la délivrance du brevet:
08.05.85 Bulletin 85/19

(84) Etats contractants désignés:
AT BE CH DE FR GB IT LI NL

(56) Documents cités:
DE - B - 1 753 440
FR - A - 2 216 963
FR - A - 2 331 007
US - A - 1 977 156
US - A - 3 897 272
US - A - 4 185 187

(73) Titulaire: **Pocachard & Cie, 21 avenue Beau Pin,
F-13008 Marseille (FR)**

(72) Inventeur: **Pocachard, Jean-Claude, 122 rue du
Commandant Roland, F-13008 Marseille (FR)**
Inventeur: **Pocachard, Thierry, 21 avenue Beau Pin,
F-13008 Marseille (FR)**

(74) Mandataire: **Dupuy, René Gaston et al, Cabinet René G.
Dupuy & Jean M.L. Loyer 14, Rue La Fayette,
F-75009 Paris (FR)**

BUNDESDRUCKEREI BERLIN

## Description

L'invention se rapporte au montage des thermostats placés sur des générateurs d'eau chaude à soutirage, et destinés à commander l'ouverture et la fermeture d'un circuit électrique.

Elle vise plus particulièrement l'utilisation d'un tel montage sur les machines ménagères à fabriquer le café du type »expresso« fonctionnant avec une pompe à haute pression et une mini chaudière parce que c'est dans cette utilisation qu'il se révèle présenter le plus d'intérêt.

Il est bien connu que pour obtenir un bon café, il est nécessaire de produire une eau chaude à environ 90° et l'idéal serait qu'elle se maintienne à cette température et ce, pendant la période de soutirage.

Cet état idéal n'est pas réalisable avec des thermostats mécaniques qui ont nécessairement une plage différentielle de plusieurs degrés entre la température de coupure et celle de réenclenchement.

Plus cette plage est réduite, plus le thermostat est coûteux.

Sur les machines à café du type sus indiqué, on utilise généralement des thermostats qui sont vendus pour une coupure à 90° et un réenclenchement à 85°.

Or, on constate qu'en réalité ces températures ne sont pas respectées du fait de perturbations résultant du montage même du thermostat.

Le brevet français n° 2 216 963 déposé le 8 février 1973, propose des améliorations notables en plaçant le thermostat dans le flux d'eau froide ou plus exactement en isolant ce flux du réservoir de la chaudière contenant l'eau chaude par une cloison déflectrice qui force ledit flux à venir au contact de l'organe sensible de ce thermostat.

On observe néanmoins que si la coupure s'effectue normalement aux environs de 90°, le réenclenchement n'intervient dans la zone où se situe la partie sensible du thermostat que vers 75° au lieu de 85° du fait de la chaleur emmagasinée dans le groupe et qui se propage par conduction jusqu'à la surface sensible du thermostat.

Il s'ensuit que l'eau à cette température de 75° est non seulement insuffisante à l'extraction de l'arome, mais qu'encore le café produit, en résultant, dans la tasse est à une température trop basse pour les gourmets.

Une solution consisterait à rechercher une température moyenne adéquate, en élevant la température de coupure, mais alors l'eau du début du soutirage sera trop chaude, brûlera la mouture du café, ce qui se traduira par un goût amer.

En analysant les causes de ce réenclenchement à trop basse température, la Demanderesse a observé que celui-ci était dû à la conduction produite par le corps métallique de la chaudière des calories de l'eau chaude qui y est contenue. La température de réenclenchement est donc obtenue lorsque l'organe sensible du thermostat est à 85° par l'action conjuguée d'une part de la température de l'eau autour de la surface sensible du thermostat (elle-même obtenue par un compromis entre la température de l'eau froide 20° par exemple et de l'eau chaude 90° par exemple), et d'autre part, de la température de la partie métallique dans laquelle est enchassée le thermostat, par exemple 90°, cette température restant stable du fait de la conduction de la chaleur en provenance de la masse du groupe.

Dans les générateurs conçus selon le FR-A-2 216 963, on peut penser réduire la largeur du passage forcé d'arrivée de l'eau froide pour rendre prépondérant l'effet de celle-ci. Cette solution se heurte à deux inconvénients, un passage réduit s'entartre rapidement et l'on risque la surchauffe dans la chaudière.

On a, certes, déjà proposé de fixer l'organe sensible du thermostat sur une pièce électro-isolante (céramique par exemple).

C'est effectivement le cas de la sonde du thermostat à dilatation décrite dans le U.S.-A-1 977 156 déposé par Staley.

Outre que la porcelaine n'est pas un matériau thermiquement isolant, mais au contraire conducteur, ce support ne jouerait aucun rôle de coupure thermique, puisque la sonde se trouve placée non dans le courant d'eau froide, mais dans un mélange du flux d'eau froide avec eau chaude contenu dans la chaudière donc dans lequel l'eau chaude joue un rôle prépondérant.

Dans le D.E-B-1 753 440, le chapeau supportant le thermostat est en un matériau thermoconducteur (par exemple céramique, ou acier ou chrome-nickel), il n'y a donc aucune isolation thermique de l'organe sensible.

La sonde thermostatique décrite dans le U.S.-A-4 185 187 déposé par Rogers plonge dans l'eau chaude ou tout au moins dans la vapeur, l'eau froide arrivant à niveau inférieur.

Dans tous ces documents, il n'y a pas de conduction perturbatrice à combattre ou à éviter.

L'invention ne présente d'intérêt que dans une disposition bien particulière de l'organe sensible du thermostat, disposition selon laquelle cet organe sensible est situé dans le flux d'eau froide ou tout au moins dans une ambiance où ce flux est très prépondérant.

Dans le cas décrit dans le FR-A-2 216 963, l'organe sensible est effectivement dans une ambiance où ce flux est prépondérant mais la conductibilité influence la partie sensible faussant la valeur moyenne de réenclenchement.

La présente invention propose une solution éliminant la conduction en isolant thermiquement le thermostat. La machine à café conforme au préambule de la revendication 1 se caractérise en ce que le thermostat est fixé sur une partie thermiquement isolante solidaire du corps de chaudière de la machine à café.

D'autres particularités et avantages apparaîtront à la lecture de la description et des revendications qui suivant, faites en regard des dessins sur lesquels:

la figure 1 est une vue schématique en coupe d'une chaudière pour machine à café perfectionnée selon l'invention;

la figure 2 est un graphique montrant les avantages du perfectionnement représenté à la figure 1.

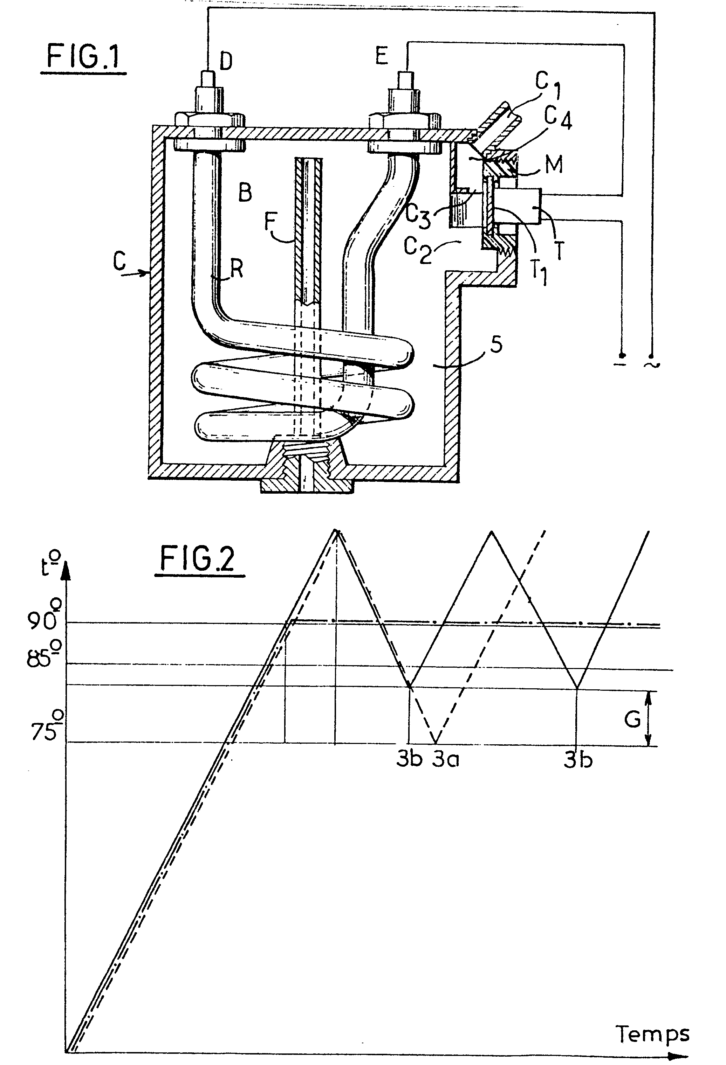

Comme on le voit à la figure 1 qui illustre à titre d'exemple une chaudière d'une machine à café du type susindiqué, dans le réservoir (B) est disposée, d'une manière traditionnelle, une résistance (R) reliée à une source de courant par des conducteurs (D) et (E) dont l'un est en série avec un thermostat (T), un tube de trop plein (F) assure l'alimentation du filtre.

Comme dans le FR-A-2 216 963, l'arrivée d'eau froide venant de la pompe (non représentée) se fait par la canalisation C1. Pour atteindre l'entrée C2 de la chaudière, l'eau froide doit traverser un couloir étroit C3 formé par la cloison déflectrice C4. Dans ce couloir est placé l'organe sensible T1 du thermostat T.

Selon l'invention cet organe sensible T1 (habituellement une plaque en un métal thermiquement très conducteur) ou l'ensemble du thermostat, est fixé sur ou à une partie thermiquement isolante, ou tout au moins peu conductrice M (matière plastique par exemple).

Sur la figure 1 on voit que la pastille conductrice T1 est placée en insert dans une douille isolante M fixée d'une manière convenable au corps de la chaudière C.

Il est bien évident que la partie isolante pourrait être une couronne de ce corps de chauffe, par exemple une virole, fixée à deux fonds métalliques, l'un recevant les extrémités de la résistance R, l'autre le tube F et l'évacuation de l'eau chaude. Elle pourrait constituer la totalité du corps C pour autant que l'on le réalise dans une matière synthétique isolante stable à la température de 100°.

L'invention apporte donc une solution simple à un problème qui, jusqu'ici était resté insoluble; le graphique de la figure 2 illustre d'ailleurs comparativement les avantages de celle-ci.

Comme on le voit sur ce graphique, la solution idéale serait celle pour laquelle après la montée en température, celle-ci resterait constante (courbe en traits mixtes).

La courbe en pointillés est celle constatée sur les machines à café construites selon le FR-A-2 216 953 et sur laquelle on observe notamment que le réenclenchement s'effectue à une température anormalement basse (75°) prouvant la présence de perturbations dues à la conductibilité thermique affectant le thermostat.

La courbe en trait plein se rapporte à l'invention, on constate une réduction des écarts de température (G) donc un gain de réenclenchement, de même qu'une réduction des phases (gain 3a–3b).

## Revendications

1. Machine à café comportant un corps de chaudière (C), une résistance électrique (R) placée dans celui-ci, ledit corps communiquant avec le filtre de la machine au moyen d'une canalisation (F), une pompe placée sur le circuit d'eau froide et alimentant le corps de chaudière (C) par un passage étroit (C3) et un thermostat (T) porté par ce corps (C) réglant le fonctionnement de la résistance (R) et de la pompe, et dont l'organe sensible (T1) est placé dans ce passage (C3), caractérisée en ce que ledit thermostat (T) est fixé sur une partie thermiquement isolante, solidaire dudit corps, en vue d'éliminer toute conduction thermique.

2. Machine à café selon la revendication 1, caractérisée en ce que le corps de chaudière (C) est lui-même réalisé en un matériau thermiquement peu conducteur.

3. Machine à café selon la revendication 1, caractérisée en ce que le thermostat (T) est fixé à une pièce (M) isolante ou peu conductrice solidaire du corps de chaudière et faisant barrière à la conductibilité thermique.

4. Machine à café selon la revendication 3, caractérisée en ce que le thermostat (T) est fixé sur un support (T1) formé d'un matériau très conducteur de la chaleur, et placé en insert dans la pièce isolante (M).

## Patentansprüche

1. Kaffeemaschine mit einem Kesselgehäuse (C), einem in diesem angeordneten elektrischen Widerstand (R), wobei das genannte Gehäuse mit dem Filter der Maschine über einen Kanal (F) in Verbindung steht, einer im Kaltwasserkreis angeordneten und das Kesselgehäuse (C) über einen engen Durchlaß (C3) speisenden Pumpe und einem von dem Gehäuse (C) getragenen, den Betrieb des Widerstandes (R) und der Pumpe steuernden Thermostat (T), dessen Fühlorgan (T1) in dem Durchlaß (C3) angeordnet ist, dadurch gekennzeichnet, daß der genannte Thermostat (T) an einem mit dem genannten Gehäuse fest verbundenen, wärmeisolierenden Teil befestigt ist, um jede Wärmeleitung auszuschalten.

2. Kaffeemaschine nach Anspruch 1, dadurch gekennzeichnet, daß das Kesselgehäuse (C) selbst aus einem schwach wärmeleitenden Material hergestellt ist.

3. Kaffeemaschine nach Anspruch 1, dadurch gekennzeichnet, daß der Thermostat (T) an einem mit dem Kesselgehäuse fest verbundenen isolierenden oder schwach leitenden Teil (M) befestigt ist, der eine Barriere für die Wärmeübertragung bildet.

4. Kaffeemaschine nach Anspruch 3, dadurch gekennzeichnet, daß der Thermostat (T) auf einem Träger (T1) befestigt ist, der aus einem stark wärmeleitenden Material besteht und in den isolierenden Teil (M) eingesetzt ist.

## Claims

1. Coffee machine comprising a boiler body (C), an electric resistor (R) disposed in the latter, this body communicating with the filter of the machine by way of a pipe (F), a pump disposed on the cold water circuit and feeding the boiler body (C) via a narrow passage (C3) and a thermostat (T) carried by the body (C) and regulating the operation of the resistor (R) and of the pump, the sensitive member (T1) of which thermostat is disposed in this passage (C3), characterised in that the thermostat (T) is fixed on a thermally insulating part fastened to said body for the purpose of eliminating any thermal conduction.

2. Coffee machine according to Claim 1, characterised in that the boiler body (C) is itself made of a material having low thermal conductivity.

3. Coffee machine according to Claim 1, characterised in that the thermostat (T) is fixed to a part (M) which is an insulator or has low conductivity and which is fastened to the boiler body and forms a barrier to thermal conductivity.

4. Coffee machine according to Claim 3, characterised in that the thermostat (T) is fixed on a support (T1) made of a material having very good thermal conductivity and inserted into the insulating part (M).

FIG.1

FIG.2